# EUROPEAN PATENT APPLICATION

(11) **EP 3 441 686 A1**
(43) Date of publication of application: **13.02.2019**
(21) Application number: 18186620.3
(22) Date of filing: 31.07.2018
(51) Int. Cl.: F24F 6/00, F24F 6/14, F24F 11/00, F24F 6/12, F24F 140/40, F24F 140/00

(54) **HUMIDIFIER RESERVOIR FLUID CONTROL**

(30) Priority: 01.08.2017 US 201715665614
(71) Applicant: D-M-S Holdings, Inc., West Des Moines, Iowa 50266 (US)
(72) Inventor: ATKINS, Billy Terrell Jr., Antioch, IL 60002 (US); SARKAR, Oishee, Waukegan, IL Illinois 60087 (US); BRADLEY, Samuel, Mundelein, IL Illinois 60060 (US); KONDAVEETI, Swapna, Gurnee, IL 60031 (US)
(74) Representative: Howe, Steven

(57) **Abstract**

Humidifier and related method embodiments are disclosed herein. A humidifier includes a liquid tank, a reservoir, a liquid atomizer, a valve, and a controller. The liquid tank defines a first interior volume, the reservoir is in liquid communication with the first interior volume, and the liquid atomizer is located in the reservoir. The valve is configured to actuate between a closed position and an opened position. The closed position prevents liquid communication between the first interior volume and the reservoir. The opened position allows liquid communication between the first interior volume and the reservoir. The controller is coupled to the valve and configured to selectively actuate the valve between the closed position and the opened position.

## Description

### TECHNICAL FIELD

This disclosure generally relates to humidifiers and related methods of operating humidifiers.

### BACKGROUND

Low humidity in an ambient environment may cause discomfort and, in some instances, health-related issues (e.g., respiratory issues). To increase the moisture content of air in an ambient environment, a humidifier can be used. A humidifier can be supplied with water and operate to output a mist into the ambient environment, thereby increasing the ambient environment's moisture content.

Currently available humidifiers can be limited in their operational capability and efficiency. For example, these currently available humidifiers may lack the capability to control an amount of water that is supplied to the mist-creating portion of the humidifier. Instead, these humidifiers may simply have the mist-creating portion filled with water at all times during humidifier operation. In these humidifiers, the only instance where the mist-creating portion may be less than completely filled with water is when the humidifier's water supply is depleted. This can result is operating the mist-creating portion of the humidifier at a less than optimal water level and, consequently, operating the humidifier less efficiently to ultimately achieve a desired increase in moisture content of the ambient environment.

### SUMMARY

In general, various exemplary embodiments relating to humidifiers, and related methods of operating humidifiers, are disclosed herein. These embodiments can be useful, for instance, in increasing the operational capability and/or efficiency of a humidifier. As one example, embodiments disclosed herein can control the amount of fluid supply (e.g., a liquid, such as water) that is present within a fluid output portion, such as a reservoir, of the humidifier. For instance, the amount of fluid supply present within the fluid output portion can be maintained at a fluid level, or a range of fluid levels, that corresponds to a focal region of a fluid atomizer located in the fluid output portion. In addition, control over the amount of fluid supply that is present within the fluid output portion may provide the humidifier with a range of functional abilities relating to fluid output parameters according to different operational modes. Thus, in various embodiments, the fluid atomizer can operate across a range of humidifier operational modes and efficiently operate to output desired parameters.

One exemplary embodiment includes a humidifier. This humidifier embodiment includes a liquid tank, a reservoir, a liquid atomizer, a valve, and a controller. The liquid tank defines a first interior volume. The reservoir is in liquid communication with the first interior volume and the liquid atomizer is located in the reservoir. The valve is configured to actuate between a closed position and an opened position. The closed position prevents liquid communication between the first interior volume and the reservoir. The opened position allows liquid communication between the first interior volume and the reservoir. The controller is coupled to the valve and configured to selectively actuate the valve between the closed position and the opened position.

In a further embodiment, this humidifier includes a liquid quantity sensor that measures a quantity of liquid within the reservoir. For instance, the liquid quantity sensor may measure the quantity of liquid in the reservoir by measuring a liquid level within the reservoir. The liquid quantity sensor can be in signal communication with the controller. The controller can actuate the valve between the opened and closed positions in response to signals from the liquid quantity sensor that correspond to one or more predetermined liquid quantities in the reservoir. For instance, the one or more predetermined liquid quantities in the reservoir can correspond to liquid levels within the reservoir that maintain liquid within the reservoir at the liquid atomizer's focal region.

Another exemplary embodiment includes a method of operating a humidifier. This method embodiment includes detecting a quantity of liquid in a reservoir of the humidifier. In response to detecting a first predetermined liquid quantity in the reservoir, the method includes actuating a valve from a closed position to an opened position. The closed position prevents liquid communication between a first interior volume of a liquid tank and the reservoir. The opened position allows liquid communication between the first interior volume of the liquid tank and the reservoir. In response to detecting a second predetermined liquid quantity in the reservoir, the method includes actuating the valve from the opened position to the closed position. The second predetermined liquid quantity in the reservoir is greater than the first predetermined liquid quantity in the reservoir. The method also includes atomizing liquid in the reservoir using a liquid atomizer and delivering atomized liquid from the reservoir to an ambient environment using a fan.

This disclosure is filed concurrently with the following three patent applications that are owned by the owner of this disclosure: US Pat. App. No. 15/665,604, titled "Humidifier Measurement and Control"; US Pat. App. No. 15/665,611, titled "Humidifier Liquid Tank"; and US Pat. App. No. 15/665,616, titled "Humidifier User Interaction".

The details of one or more examples are set forth in the accompanying drawings and the description below. Other features, objects, and advantages will be apparent from the description and drawings.

### BRIEF DESCRIPTION OF THE DRAWINGS

The following drawings are illustrative of particular embodiments of the present invention and therefore do not limit the scope of the invention. The drawings are intended for use in conjunction with the explanations in the following description. Embodiments of the invention will hereinafter be described in conjunction with the appended drawings, wherein like numerals denote like elements.
FIG. 1A is a perspective view of an exemplary embodiment of a humidifier.
FIG. 1B is a perspective view of an alternative exemplary embodiment of a humidifier.
FIG. 2 is a separated, perspective view of the exemplary humidifier of FIG. 1A in which a liquid tank is removed from a base portion.
FIG. 3 is a perspective view of an underside of the exemplary liquid tank of FIG. 2.
FIG. 4 is a perspective view of the exemplary base portion of FIG. 2.
FIG. 5 is a cross-sectional view of the exemplary humidifier of FIG. 1A taken along line A-A in FIG. 1A.
FIGS. 6A and 6B are perspective views, in partial section, of a valve of the exemplary humidifier of FIG. 1A. FIG. 6A shows the valve in a closed position, while FIG. 6B shows the valve in an opened position.
FIG. 7 is a schematic diagram showing exemplary communication between various components within the exemplary humidifier of FIG. 1A.
FIG. 8 is a flow diagram showing an exemplary embodiment of a process for operating a humidifier.

### DETAILED DESCRIPTION

The following detailed description is exemplary in nature and is not intended to limit the scope, applicability, or configuration of the invention in any way. Rather, the following description provides some practical illustrations for implementing exemplary embodiments of the present invention. Examples of constructions, materials, and/or dimensions are provided for selected elements. Those skilled in the art will recognize that many of the noted examples have a variety of suitable alternatives.

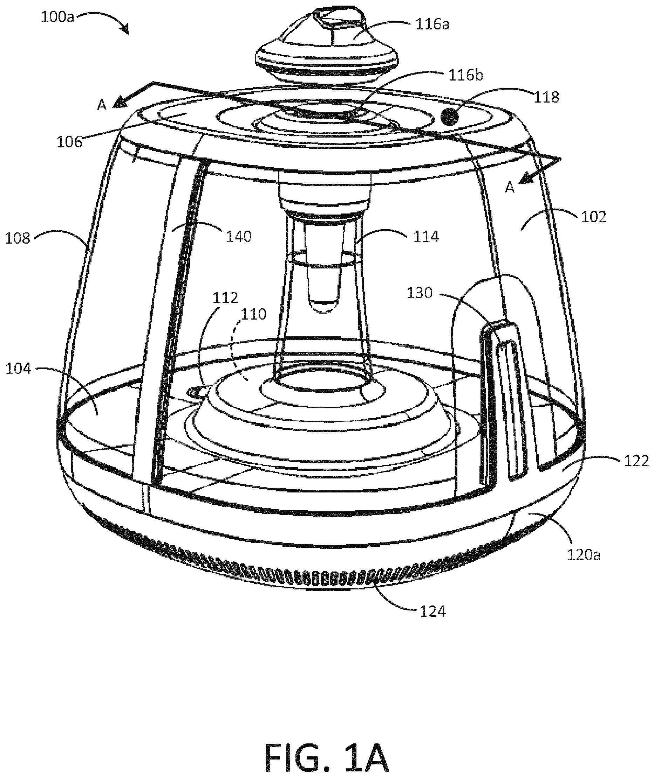

FIG. 1A is a perspective view of an exemplary embodiment of a humidifier 100a. As shown, the humidifier 100a includes a liquid (e.g., water) tank 102. The liquid tank 102 defines a first interior volume therein that can store a supply of water or other liquid for use by the humidifier 100a. Liquid tank 102 includes a floor 104, a lid 106, and a sidewall 108 extending between the floor 104 and the lid 106. In one example, the first interior volume of the liquid tank 102 can be defined by the sidewall 108 between the floor 104 and the lid 106. In the illustrated embodiment of FIG. 1A, the sidewall 108 substantially surrounds the perimeter of the humidifier 100a. However, it will be appreciated that in various embodiments, the liquid tank 102 need not necessarily extend to the outer limits of the humidifier 100a. That is, in some examples, the sidewall 108 of the liquid tank 102 does not necessarily surround or follow the perimeter of the humidifier 100a. In the illustrative example of FIG. 1A, sidewall 108 is shown as clear. In some examples, the sidewall 108 may be clear, transparent, translucent, or the like so that a user may readily observe certain parameters, such as the level of liquid within the liquid tank 102. In other examples, the sidewall 108 may be opaque.

In the example of FIG. 1A, the floor 104 of the liquid tank 102 can enclose, at least in part, a reservoir 110 in which liquid can be stored for more immediate use by the humidifier 100a than the liquid in the liquid tank 102. That is, in some examples, humidifier 100a uses liquid in the reservoir 110 to humidify the environment surrounding the humidifier 100a, while liquid from the liquid tank 102 is used to replenish the reservoir 110 as appropriate. In the example of FIG. 1A, the humidifier 100a includes a selective sealing component 112 disposed in the floor 104 of the liquid tank 102 to facilitate communication of liquid to the reservoir 110 from the first interior volume of the liquid tank 102.

Humidifier 100a includes a fluid column 114 through which atomized liquid can travel from the reservoir 110 out of the humidifier 100a. The column 114 can extend within the interior of the liquid tank 102. As shown in the example of FIG. 1A, the column 114 is centered within the liquid tank 102. The lid 106 can include a cap (e.g., 116a, 116b) disposed over the column 114 to control the emission of mist. For example, a directional cap 116a can be used to emit mist in a preferred direction from the humidifier 100a. In other examples, a domed cap 116b can provide substantially radially uniform mist emission. In some embodiments, such caps can be interchangeable for desired operation by the user.

In the illustrated embodiment, the lid 106 of the tank 102 includes a burp valve 118. The burp valve 118 can allow for fluid communication between the first interior volume of the tank 102 and an ambient environment. In one example, the burp valve 118 can be actuated between a first position that allows for such fluid communication thereat and a second positon that seals the first interior volume from the ambient environment thereat. The burp valve 118 may, as an example, be a self-actuated pressure control valve such that it is configured to actuate from the second position to the first position when a pressure within first interior volume of the tank 102 reaches a predetermined pressure level. For instance, at times when the column 114 is sealed from the ambient environment, communication of liquid from the tank 102 to the reservoir 110 may cause pressure to build within the tank 102. If this pressure builds to a sufficient level, it may tend to hold liquid in the tank 102 and thereby impede communication of liquid from the tank 102 to the reservoir 110. Accordingly, the burp valve 118 can be useful in relieving pressure built up within the tank 102 by allowing air to pass between the first interior volume of the tank 102 and the ambient environment.

In the example of FIG. 1A, the humidifier 100a includes a base portion 120a supporting the tank 102. In some embodiments, the base portion 120a can house all, or a portion of, reservoir 110 below the floor 104 of the tank 102. The base portion 120a can similarly house other components useful for operation of the humidifier 100a. In various examples, the base portion 120a can house components such as an atomizer for producing mist, one or more fans, a controller for facilitating various operations of the humidifier 100a, one or more sensors (e.g., a liquid quantity sensor), one or more power supplies for providing electrical power to various humidifier components, and the like. As shown, base portion 120a of the humidifier 100a of FIG. 1A includes one or more vents 124, for example, for facilitating air transfer into the interior of the base portion 120a. In some examples, the base portion can include one or more sensors, such as a temperature sensor and/or a humidity sensor, for sensing conditions of the local environment of the humidifier. In some examples, properties of the air that enter the base portion 120a of the humidifier via the vent 124 can be analyzed using one or more sensors. Additionally or alternatively, vents 124 can facilitate cooling of various components housed within the base portion 120a. In some embodiments, humidifier 100a includes one or more fans positioned within the base portion 120a to further promote air cooling of components within the base portion 120a. Additionally or alternatively, one or more fans within the humidifier 100a can be used to force mist from the atomizer through column 114 and out of the cap 116a and/or 116b.

In the illustrated example, the base portion 120a is removably coupled to the tank 102 by way of a mate ring 122. In some examples, the mate ring is integrally formed into the tank 102 such that when the tank 102 and base portion 120a are joined, the mate ring 122 engages base portion 120a. The mate ring 122 can provide a sealing engagement between the base portion 120a and the tank 102 so that liquid in the tank 102 and/or the base portion 120a (e.g., in reservoir 110) does not escape the humidifier 100a at the interface between the tank 102 and base portion 120a.

The humidifier 100a of FIG. 1A can include an interface 130 and a tank water level sensor 140 positioned on the liquid tank 102. In some embodiments, the interface 130 provides interaction with a user. Such interaction can include receiving an input from a user, such as a mist emission setting, for example, via a touch screen, push-button interface, one or more dials, switches, or the like. In some examples, combinations of such interface can be used. Additionally or alternatively, interface 130 can be used for outputting information to a user, such as an indication of a mist emission setting, for instance, via one or more light indicators, such as light emitting diodes (LEDs) or other light sources.

In various examples, light from the interface 130 can present information to the user, such as a mist emission level from the humidifier. In some such examples, the interface includes a plurality of light emitting elements arranged linearly. The number of light emitting elements that actively emit light can correspond to a level of mist emission. For example, a lowest level of mist emission can correspond to a single light source, for instance, positioned nearest the mate ring 122. As the mist emission increases, the number of active light sources can similarly increase to represent the increasing emission.

As shown, humidifier 100a further comprises the tank water level sensor 140 that can be used to detect the level of water in the liquid tank 102. For instance, in the illustrated examples, tank water level sensor 140 extends along the vertical dimension of sidewall 108 so that the interface between the water and air in the tank 102 at the tank water level sensor 140 is representative of the amount of water in the tank 102. In some embodiments, tank water level sensor 140 comprises a capacitive sensor configured to detect the water level based on changes in capacitance at the tank water level sensor 140. In some such examples, the internal components of the tank water level sensor 140 can be isolated from the external environment surrounding the humidifier 100a so that any stray electric fields or touching of the outer surface of the humidifier 100a does not impact the capacitance of the tank water level sensor 140.

In some embodiments, a controller can be configured to control operation of one or more components, such as the interface 130, tank water level sensor 140, atomizer (not shown), fan (not shown), a reservoir valve and the like. In some such embodiments, the controller can be positioned in the base portion 120a of the humidifier 100a. A controller positioned in the base portion 120a can communicate with various components via wired or wireless communication. In some examples, the controller positioned in the base portion 120a can be arranged to communicate with components in the tank 102 (e.g., the interface 130, the tank water level sensor 140, etc.) via a connector that facilitates electrical communication between the base portion 120a and the mate ring 122.

As shown, base portion 120a of the humidifier 100a of FIG. 1A can include one or more vents 124, for example, for facilitating air transfer into the interior of the base portion 120a. In some examples, the base portion can include one or more sensors, such as a temperature sensor and/or a humidity sensor, for sensing conditions of the local environment of the humidifier. In some examples, properties of the air that enter the base portion 120a of the humidifier via the vent 124 can be analyzed using one or more sensors. Additionally or alternatively, vents 124 can facilitate cooling of various components housed within the base portion 120a.

In some embodiments, humidifier 100a includes one or more fans positioned within the base portion 120a to further promote air cooling of components within the base portion 120a, for example, by pulling in ambient air via vents 124. Additionally or alternatively, one or more fans within the humidifier 100a can be used to force mist from the atomizer through column 114 and out of the cap 116a and/or 116b.

In other examples, vents 124 may be excluded. For instance, in some embodiments, air cooling may not be necessary within the base portion 120a. Additionally or alternatively, in some embodiments, one or more sensors for sensing conditions of the ambient environment may be positioned outside of the humidifier and may be in wired or wireless communication with one or more humidifier components. In some such examples, vents (e.g., 124 in FIG. 1A) are not required for sampling ambient air via internal components housed in the base portion (e.g., 120a).

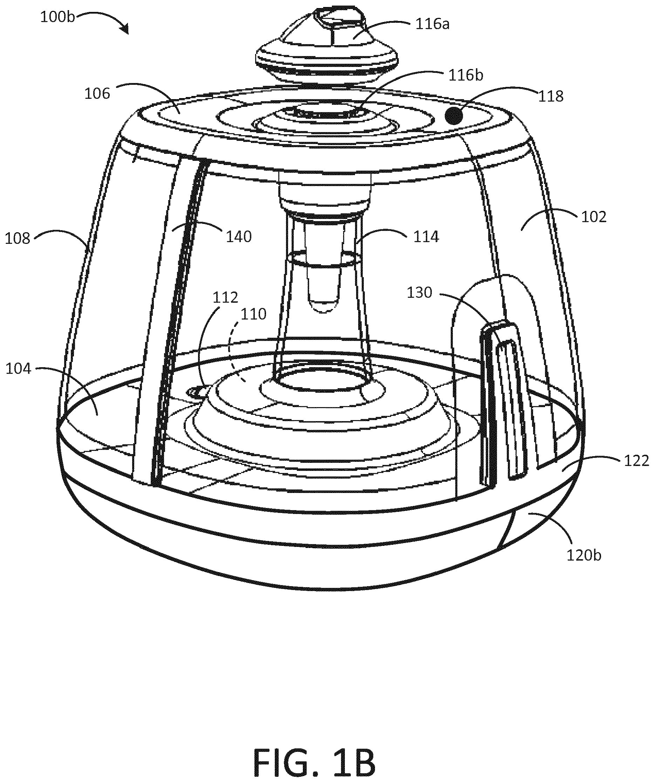

FIG. 1B shows a perspective view of an alternative humidifier without vents in the base portion. As shown, the humidifier 100b of FIG. 1B is similar to the humidifier 100a in FIG. 1A, and may operate generally as described with respect to humidifier 100a in FIG. 1A. However, as shown, base portion 120b of humidifier 100b does not include vents similar to vents 124 shown in base portion 120a in FIG. 1A.

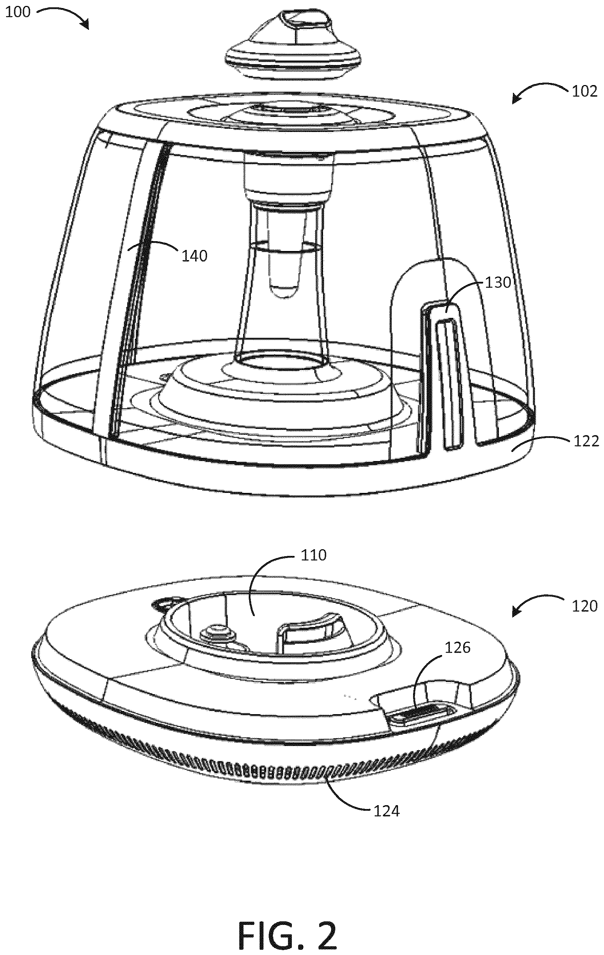

FIG. 2 shows a separated, perspective view of the exemplary humidifier 100 of FIG. 1A in which the liquid tank 102 is removed from the base portion 120. In this embodiment, mate ring 122, interface 130, and tank liquid level sensor 140 are included with the liquid tank 102. As noted above and shown here, the base portion 120 includes a reservoir 110, which can be used for storing liquid to be atomized during operation of the humidifier 100. As described elsewhere herein, in some examples, the base portion 120 includes components such as a power supply, controller, liquid atomizer, fan, valve, and the like. Some such components can be housed by the base portion 120, for example, enclosed by vent 124 to allow air cooling of such components. In other embodiments, vents 124 may be omitted, such as shown in FIG. 1B, if cooling is not required or is provided another way. For instance, in some embodiments, vents substantially surrounding the perimeter of the base portion 120 may be omitted. However, in some such examples, openings can be positioned elsewhere in the base portion 120 (e.g., on a bottom surface) in order to permit air intake for atomizer fan operation. The reservoir 110 can be sealed from other portions of the base portion 120 so that fluid does not escape the reservoir 110 and interact with components such as a controller and/or a power supply.

In the example of FIG. 2, the base portion 120 includes a lower connector 126. In some examples, lower connector 126 is configured to mate with a corresponding connector on the mate ring 122. In some such examples, lower connector 126 can be in communication with various components housed in the base portion 120 such that, when connected with a corresponding connector (e.g., on the liquid tank), it can facilitate communication between such components and the mate ring 122. Mate ring 122 can be in communication with, for instance, the interface 130 and/or the tank liquid level sensor 140. Thus, in some examples, lower connector 126 can facilitate communication between components in the base portion 120 (e.g., a controller and/or a power supply) and the tank liquid level sensor 140 and/or the interface 130.

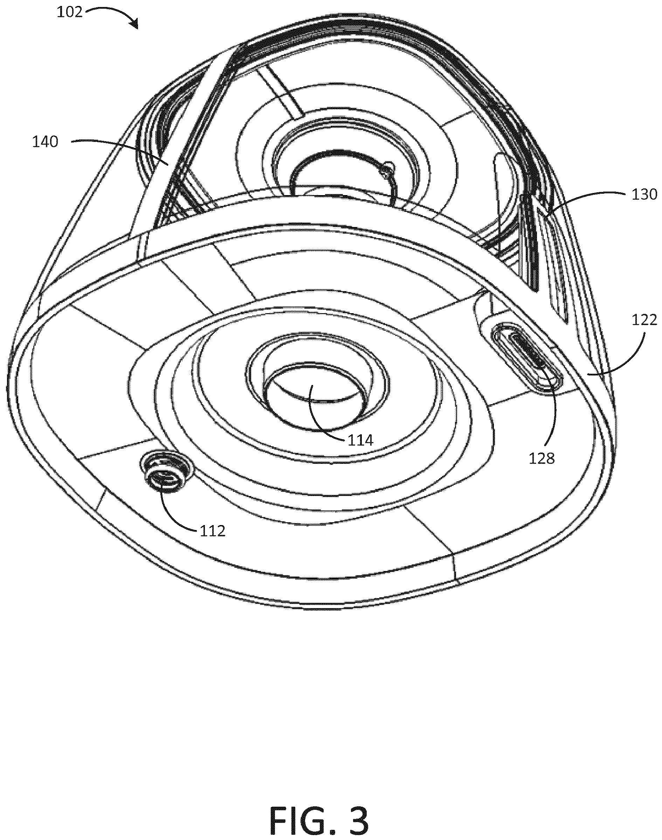

FIG. 3 shows a perspective view of an underside of the exemplary liquid tank 102. As described elsewhere herein, the tank 102 of FIG. 3 includes mate ring 122, interface 130, and tank liquid level sensor 140. The tank 102 also includes the column 114 through which mist can be emitted (e.g., from the base portion) into the ambient environment.

Further shown in FIG. 3 is the selective sealing component 112. As noted, the selective sealing component 112 can facilitate communication of liquid from the tank 102 to other portions of the humidifier (e.g., into the reservoir of the base portion). The selective sealing component 112 can be actuated between opened and closed positions to allow liquid to be, and prevent liquid from being, respectively, communicated from the tank 102. For instance, the selective sealing component 112 may mate with a corresponding member of another portion of the humidifier (e.g., the base portion) to cause the selective sealing component 112 to actuate from the closed position to the opened position. As one example, the selective sealing component 112 may be a spring loaded valve that is biased to the closed position and moved to the opened position upon mating with a corresponding member. Likewise, this biasing configuration can force the selective sealing component 112 to the closed position when the tank 102 is moved from the mating position with the corresponding member. The selective sealing component 112 can be useful, for instance, in allowing liquid to be communicated from the tank 102 during humidifier operation yet preventing liquid from leaking out of the tank 102 when the tank 102 is removed from the humidifier (e.g., to refill the first interior volume of the tank 102, to clean the first interior volume of the tank 102, etc.).

The liquid tank 102 of FIG. 3 further includes an upper connector 128. In some examples, the upper connector 128 is configured to mate with another connector (e.g., lower connector 126 of FIG. 2) to facilitate communication between various components. In some embodiments, the mate ring 122 includes communication channels configured to provide electrical communication between the upper connector 128 and other system components, such as the interface 130 and/or the tank liquid level sensor 140. In some such examples, communication channels comprise electrically conductive channels, such as wires disposed in the mate ring 122.

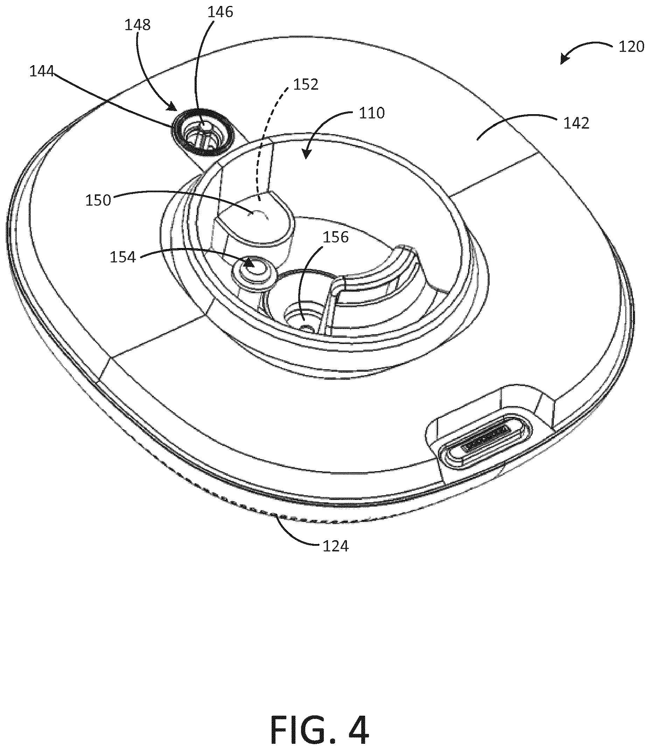

FIG. 4 shows a perspective view of the base portion 120 of the exemplary humidifier. As noted elsewhere herein, the base portion 120 can include the reservoir 110. The reservoir 110 can be configured to hold liquid for being atomized. In the illustrated embodiment, the base portion 120 is shown as including a housing, generally shown at 142. In some embodiments, the housing 142 at least partially defines the boundary of the reservoir 110 and prevents liquid from escaping into other portions of the base portion 120. For instance, the reservoir 110 can be formed by the housing 142, of the base portion 120, and the floor of the tank. In some such examples, the housing 142 can further enclose additional components, such as a controller and/or a power supply (not shown). In some examples, the housing 142 includes vent 124 to allow air to flow into an area defined by the housing 142, for example, to facilitate air cooling of various components. In other examples, vent 124 may be omitted, such as shown in FIG. 1B.

As shown in FIG. 4, the base portion 120 can include a port 144 and an actuation member 146. The port 144 can be defined in the housing 142. The actuation member 146 can be located at or near the port 144. For instance, as shown in the illustrated embodiment, the actuation member 146 may extend out from the housing 142 of the port 144. As one example, the actuation member 146 may have an end extending out to a greater elevation than the housing 142. This end of the actuation member 146 may have a geometry that is complementary to the selective sealing component of the tank described elsewhere herein.

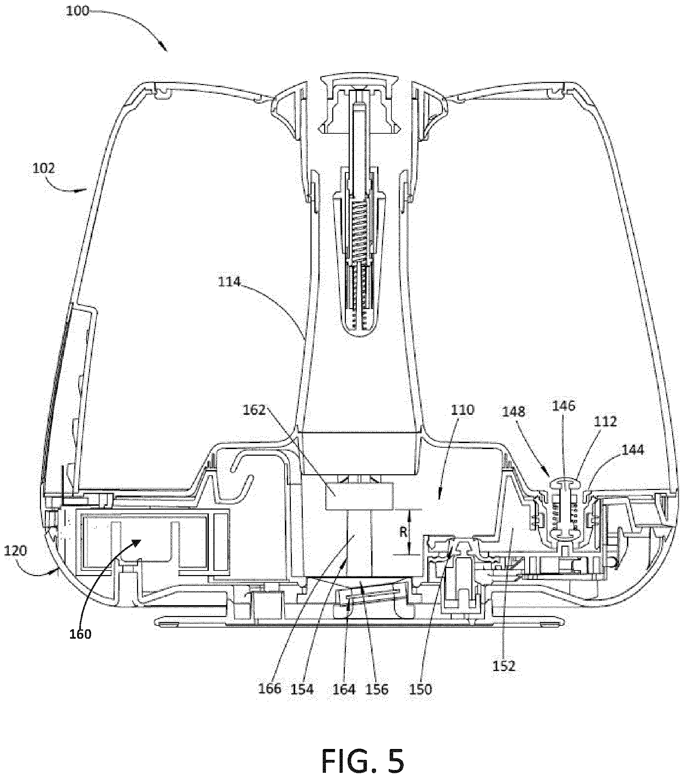

Together, the port 144 and actuation member 146 can define a tank interface assembly 148 of the base portion 120. The tank interface assembly 148 can facilitate fluid communication between the tank and the base portion 120, and, in particular, the reservoir 110 thereof. The tank interface assembly 148 can be positioned in the base portion 120 at a location that is aligned with a location of the selective sealing component of the tank when the tank is coupled to the base portion 120. Upon coupling the tank to the base portion 120, the actuation member 146 can be configured to mate with the selective sealing component of the liquid tank and, thereby, actuate the selective sealing component to the opened position (shown, e.g., in FIG. 5). This can allow liquid from the tank to be communicated to the reservoir 110 of the base portion 120. Thus, at times when the tank is coupled to the base portion 120 the selective sealing component of the tank can be in the opened position. On the other hand, when the tank is uncoupled from the base portion 120, the actuation member 146 is removed from the selective sealing component, and the selective sealing component is brought to the closed position.

To actively control communication of liquid from the tank to the reservoir when the tank is coupled to the base portion 120, the base portion 120 can include a valve 150. The valve 150 may facilitate the selective addition of liquid to the reservoir 110 from the tank. To do so, the valve 150 can be configured to actuate between a closed position and an opened position. The closed position of the valve 150 can prevent liquid from being communicated between the first interior volume of the tank and the reservoir 110. The opened position of the valve 150 can allow liquid to be communicated between the first interior volume of the tank and the reservoir 110. The humidifier's controller, for instance, can be coupled to the valve 150 and configured to cause selective actuation of the valve 150 between the closed and opened positions.

Also shown in the example of FIG. 4, the humidifier can include a holding chamber 152. The holding chamber 152 can define a second interior volume therein. As shown here, the holding chamber 152 is located in the base portion 120. The holding chamber 152 can be in fluid communication with the reservoir 110 at a first location and with the first interior volume of the tank at a second location. In the illustrated embodiment, the holding chamber 152 is in fluid communication with the reservoir 110 at the first location via the valve 150. And, in the illustrated embodiment, the holding chamber 152 is in fluid communication with the first interior volume of the tank at the second location via the tank interface assembly 148, in particular via the port 144. When the tank is coupled to the base portion 120, liquid can flow through the port 144 and into (e.g. fill) the second interior volume of the holding chamber 152.This liquid can be held in the holding chamber 152 if the valve 150 is in the closed position. When the valve 150 is selectively actuated (e.g., by the controller) to the opened position, liquid held in the holding chamber 152 can be communicated into the reservoir 110. Thus, in this exemplary embodiment, liquid is communicated from the tank to the holding chamber 152 (e.g., when the tank is coupled to the base portion 120) and from the holding chamber 152 to the reservoir 110 (e.g., when the valve 150 is actuated to the opened position). In another embodiment, there need not be a holding chamber 152, and thus liquid is communicated directly into the reservoir 110 from the tank interface assembly 148.

FIG. 4 further illustrates that the reservoir 110 can include a liquid quantity sensor 154. The liquid quantity sensor 154 can monitor a quantity of liquid (e.g., water) within the reservoir 110. The liquid quantity sensor 154 can be coupled to the humidifier's controller so as to provide data signals to the controller corresponding to the liquid quantity in the reservoir 110. As explained in more detail elsewhere herein, the controller can use signals from the liquid quantity sensor 154 to take actions in relation to other components of the humidifier. For instance, signals from the liquid quantity sensor 154 can be used by the controller to actuate the valve 150 in order to add liquid to the reservoir 110.

In addition, FIG. 4 shows a liquid atomizer 156 of the base portion 120. The liquid atomizer is shown positioned here in the reservoir 110. The liquid atomizer 156 can be used to atomize (e.g., vaporize) liquid within the reservoir 110 for emission of mist into the ambient environment. As one example, the liquid atomizer 156 can include an ultrasonic agitator. The ultrasonic agitator can include a transducer element, such as a piezoelectric transducer, to create an ultrasonic frequency oscillation in the adjacent liquid in the reservoir 110. This action can cause such liquid to be atomized and act to generate a mist.

FIG. 5 illustrates a cross-sectional view of the exemplary humidifier 100 taken along line A-A in FIG. 1A. As shown in FIG. 5, the fan 160 can be located in the base portion 120 and in fluid communication with the reservoir 110. In some cases, the fan 160 can be positioned in the reservoir 110, which could include being positioned adjacent the liquid atomizer 156. The fan 160 can be coupled to the humidifier's controller so as to allow the controller to signal the fan 160 on and off as appropriate during operating. During operation of the humidifier 100, the fan can be driven to deliver atomized liquid from the reservoir 110 to an ambient environment. The fan 160 can forcibly deliver the atomized liquid from the reservoir 110 to the ambient environment through the column 114. In one example, the fan 160 can be aligned, and in fluid communication, with an end of the column 114.

As also shown in FIG. 5, the liquid quantity sensor 154 is located in the reservoir 110. As noted elsewhere herein, the liquid quantity sensor 154 can monitor a quantity of liquid within the reservoir 110. In the illustrated embodiment, the liquid quantity sensor 154 monitors the quantity of liquid within the reservoir 110 by monitoring the level of the liquid within the reservoir 110. Here, the liquid quantity sensor 154 includes a floating member 162 and a sensing device 164. The floating member 162 is located in the reservoir 110 and can be movably secured to a support member 166, such as a pole or other support structure in the reservoir 110 or elsewhere. The sensing device 164 can be located adjacent to the floating member 162. As shown here, the sensing device 164 may be positioned outside the reservoir 110 on an opposite side of a wall forming the reservoir 110 and positioned to be aligned with the floating member 162 (e.g., positioned on a central longitudinal axis of the support member 166). The sensing device 164 can be coupled to, and in communication with, the controller.

As one example, the liquid quantity sensor 154 can monitor the level of the liquid within the reservoir 110 by detecting a distance between the floating member 162 and the sensing device 164. For instance, in one embodiment, the floating member 162 can be a magnet and the sensing device 164 can be a Hall-Effect sensor. The floating member 162 (e.g., magnet) will move along the support member 166 as the liquid level rises and falls within the reservoir 110. As this occurs, the distance between the floating member 162 and the sensing device 164 (e.g., Hall-Effect sensor) will change accordingly. The sensing device 164 can generate and output signals (e.g., to the controller) that represent a distance between the floating member 162 and the sensing device 164. As an example, the sensing device 164 can output a first signal, at a first time, when the floating member 162 is a first predetermined distance from the sensing device 164. The sensing device 164 can further output a second signal, at a second later time, when the floating member 162 is a second predetermined distance from the sensing device 164. In this example, if the second predetermined distance is greater than the first predetermined distance this would indicate that the liquid level, and thus liquid quantity, within the reservoir 110 has increased between the first and second times.

The ability to monitor the liquid level within the reservoir 110 using the liquid quantity sensor 154 can be useful in efficiently operating the humidifier 100. For example, the liquid atomizer 156 (e.g., an ultrasonic agitator) can have a focal region R, as shown in the example of FIG. 5, for atomizing liquid within the reservoir 110. The focal region R can define a range of liquid levels within the reservoir 110 at which the liquid atomizer 156 effectively atomizes liquid. For instance, when the liquid level within the reservoir 110 is too high, and thus an agitator of the liquid atomizer 156 is submerged in an excessive amount of liquid, the liquid atomizer may not be able to atomize liquid to an extent needed for a particular operational mode. Likewise, when the liquid level within the reservoir 110 is too low, and thus the agitator of the liquid atomizer 156 is not submerged in a sufficient amount of liquid, the liquid atomizer also may not be able to atomize liquid to an extent needed for a particular operational mode. It is noted that the focal region R is illustrated schematically in FIG. 5, and the extent of the focal region R may vary depending on the specific type of liquid atomizer 156 that is used and/or the desired efficiency level of the device. Moreover, in some cases, the extent of the focal region R can vary according to the operational mode that is input for humidifier operation.

The humidifier 100 can monitor the liquid level within the reservoir 110 using the liquid quantity sensor 154 and accordingly take action to maintain the liquid level in the reservoir 110 within the focal region R of the liquid atomizer 156. As noted, a controller of the humidifier 100 can be coupled to both the liquid quantity sensor 154 (e.g., via the sensing device 164) and the valve 150. The controller can receive a first signal from the liquid quantity sensor 154 corresponding to a first predetermined liquid quantity in the reservoir 110. In response, the controller can actuate the valve 150 from the closed position to the opened position to thereby cause liquid to begin filling into the reservoir 110, such as from the tank 102 (e.g., via the holding chamber 152). In one example, the first predetermined liquid quantity can correspond to a lower end of the liquid levels (e.g., the lowest liquid level) that are within the focal region R. Later, at a second time, the controller can receive a second signal from the liquid quantity sensor 154 corresponding to a second predetermined liquid quantity in the reservoir 110. In response, the controller can actuate the valve 150 from the opened position to the closed position to thereby stop liquid from entering into the reservoir 110. In this same example, the second predetermined liquid quantity can correspond to a higher end of the liquid levels (e.g., the highest liquid level) that are within the focal region R. In this way, the humidifier 100 can maintain liquid within the reservoir 110 that is within the focal region R.

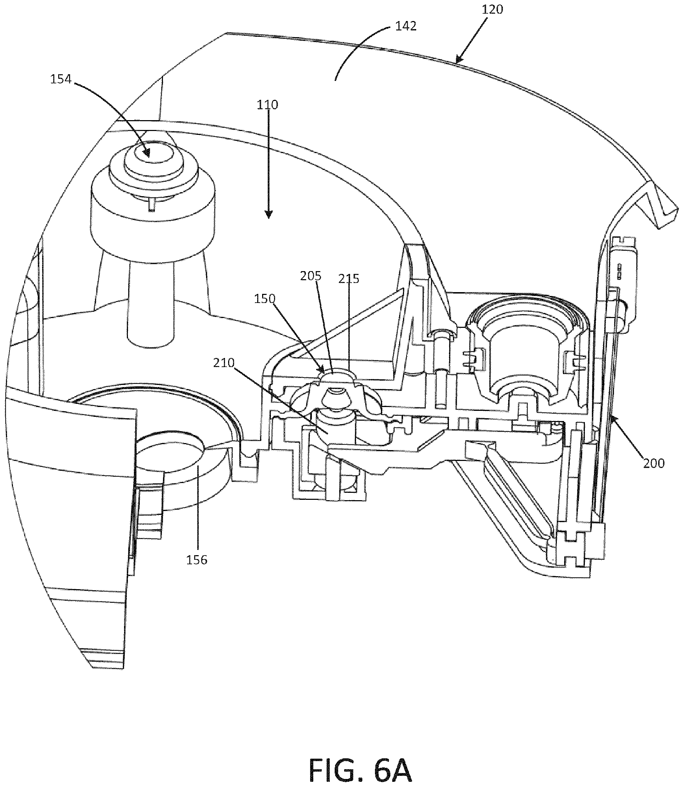

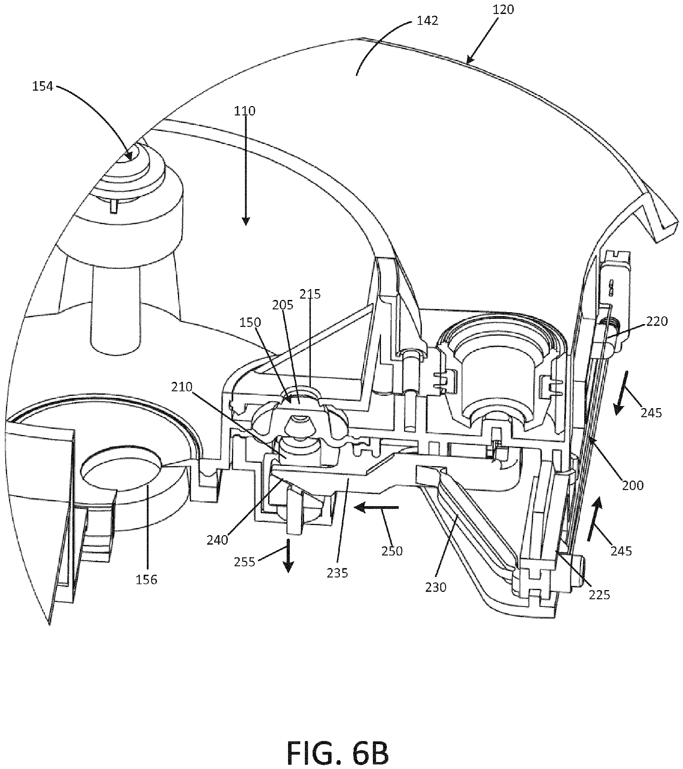

FIGS. 6A and 6B illustrate perspective views, in partial section, of the valve 150. As noted previously, the valve 150 can facilitate the selective addition of liquid to the reservoir 110 by actuating between closed and opened positions. FIG. 6A shows the valve 150 in a closed position. The closed position of the valve 150 can prevent liquid from being communicated between the first interior volume of the tank and the reservoir 110. FIG. 6B shows the valve 150 in an opened position. The opened position of the valve 150 can allow liquid to be communicated between the first interior volume of the tank and the reservoir 110. The humidifier's controller, for instance, can be coupled to the valve 150 and configured to cause selective actuation of the valve 150 between the closed and opened positions.

In the exemplary embodiment shown in FIGS. 6A and 6B, to facilitate actuation of the valve 150 between the closed and opened positions, a shape memory alloy 200 is included. The shape memory alloy 200 can be coupled to the valve 150. The shape memory alloy 200 can have an original (undeformed) shape and a deformed shape. In the example shown, the shape memory alloy 200 can include nitinol wire. In a particular embodiment, the valve 150 may be in the closed position when the shape memory alloy 200 is in the original shape and in the opened position when the shape memory alloy 200 is in the deformed shape. Thus, to actuate the valve 150 to the opened position the shape memory allow 200 can be transformed to the deformed shape. For instance, the humidifier's controller can be coupled to the valve 150 via the shape memory alloy 200. The controller can output a signal to actuate the valve 150 from the closed position to the opened position. This can include providing a current to the shape memory alloy 200 to transform the shape memory alloy 200 from the original shape to the deformed shape, and thus move the valve 150 from the closed position to the opened position. In other embodiments, the signal output from the controller can cause the shape memory alloy 200 to be transformed by other means, such as in the form of a variety of other applied heat sources. Accordingly the shape memory allow (e.g., nitinol wire) 200 can be deformed in response to an actuation signal from the controller. In one example, the shape memory alloy 200 can return to the original shape when the controller terminates the actuation signal (e.g., the supply of current to the shape memory alloy 200 is stopped). Including a shape memory alloy 200 may, for instance, provide cost and space advantages over other certain types of valves while providing the intended functionality of the humidifier.

FIG. 6A shows the valve 150 in the closed position and the shape memory alloy 200 in the original shape. In this example, the valve 150 includes a valve sealing surface 205 and a valve support 210. When the shape memory alloy 200 is in the original shape as shown in FIG. 6A, the valve support 210 can be extended upward and press the valve sealing surface 205 against a reservoir port 215 to close the valve 150. For instance, the valve support 210 can include a biasing member, such as an internal spring, that provides an upward biasing force on the valve support 210.

To actuate the valve 150 to the opened position the shape memory allow 200 can be transformed to the deformed shape. As noted, the shape memory alloy 200 can be deformed in response to an actuation signal from the controller. FIG. 6B shows the valve 150 in the opened position and the shape memory alloy 200 in the deformed shape (e.g., a more compressed state relative to the original shape). Here, when the shape memory alloy 200 is in the deformed shape, the valve sealing surface 205 is moved away from its position pressing against the reservoir port 215 and thereby opens the reservoir port 215 into the reservoir 110.

The shape memory alloy 200 can be coupled to the valve 150 in a variety of suitable configurations that allow deformation of the shape memory alloy 200 to open the valve 150. One example of such a configuration is described here in reference to FIG. 6B. In the illustrated example of FIG. 6B, the shape memory alloy 200 (e.g., nitinol wire) is secured to a first anchor 220 and a second anchor 225. The second anchor 225 is attached to a transfer arm 230. The transfer arm 230 is attached to an actuation slider 235 which movably interfaces with a surface 240 of the valve support 210. In the configuration shown here, the surface 240 and the interfacing end of the actuation slider 235 include complimentary angled portions that enable relative movement thereat.

As the shape memory alloy 200 is transformed to the deformed shape, this change in the shape memory alloy 200 can bring the first anchor 220 and the second anchor 225 closer together as indicated by the arrows 245. As one example, the deformed shape of the shape memory alloy 200 can be a more compressed state relative to the original shape, and transformation to this more compressed state can supply force needed to bring the first and second anchors 220, 225 closer together. As the first and second anchors 220, 225 are brought closer together, the arm 230 acts to transfer force from the second anchor 225 to the actuation slider 235. In one instance, force is transferred to the actuation slider 235 in a direction generally perpendicular to the first and second anchors 220, 225. This causes the actuation slider 235 to move along the surface 240 of the valve support 210 as indicated by the arrow 250. As the actuation slider 235 is moved along the surface 240 it can overcome the upward bias force on the valve support 210 and move the valve support 210 downward as indicated by the arrow 255. This, in turn, can bring the valve sealing surface 205 away from its position pressing against the reservoir port 215 and thereby opens the valve 150 into the reservoir 110. Thus, in this way, deforming the shape memory alloy 200, such as via an actuation signal from the controller, can actuate the valve 150 to the opened position. Likewise, the shape memory alloy 200 can return to its original shape when the controller terminates the actuation signal.

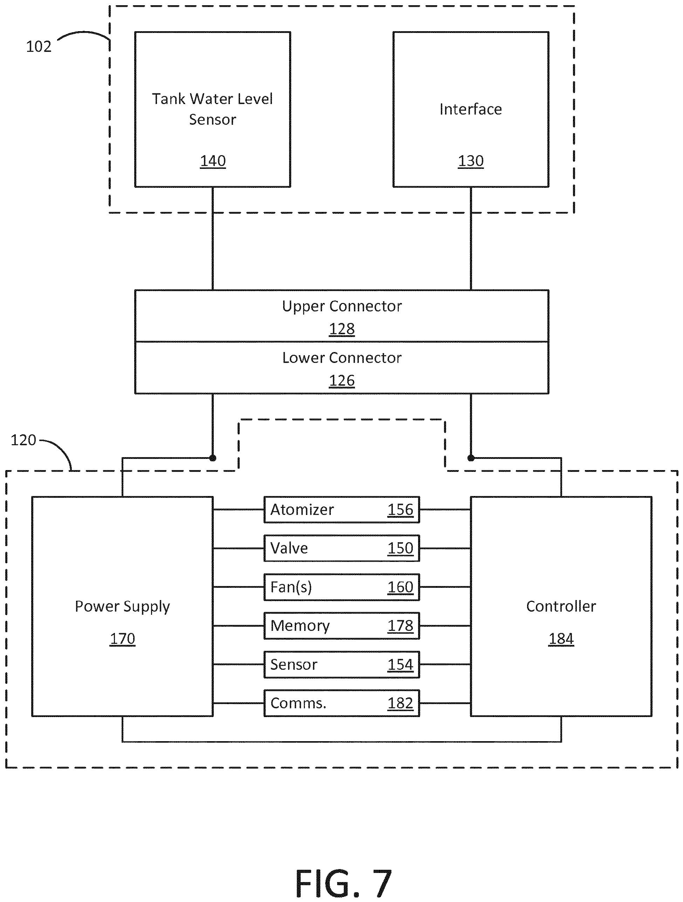

FIG. 7 is a schematic diagram showing exemplary communication between various system components within a humidifier. In the illustrated embodiment, the liquid tank 102 includes the tank water level sensor 140 and the interface 130. The example of FIG. 7 further includes the base portion 120 including a power supply 170 and a controller 184. As described elsewhere herein, such components can be housed in the base portion 120 of the humidifier and, for instance, be supported by a circuit board therein.

The base portion 120 further includes additional humidifier components, such as the liquid atomizer 156, the valve 150, one or more fans 160, a memory 178, liquid quantity sensor 154 and one or more other sensors (e.g., a temperature sensor, humidity sensor, etc.), and a communication interface 182. Such components may be used during various operations of the humidifier. For instance, in some exemplary embodiments, atomizer 156 and one or more fans 160 can operate together to create mist from liquid stored in a reservoir and subsequently expel the mist from the humidifier. This could include one or more fans 160 in fluid communication with the fluid column to deliver mist created by the atomizer 156 through the fluid column to the ambient atmosphere. Memory 178 can be used to store operating instructions for the controller 184 and/or data collected during various humidifier operations. Additionally or alternatively, controller 184 can receive data from the liquid quantity sensor 154 and one or more sensor(s), when present, and/or the fan(s) 160. In various examples, components such as memory 178 may be integrated into controller 184 or may be stand-alone components (e.g., on a circuit board).

According to the exemplary configuration of FIG. 7, the controller 184 is in communication with the atomizer 156, valve 150, fan(s) 160 (e.g., a centrifugal fan), memory 178, sensor(s) 154, communication interface 182, and lower connector 126. The lower connector 126 can facilitate communication with the tank water level sensor 140 and/or the interface 130 by way of the upper connector 128. While shown as being in communication with the tank water level sensor 140 and the interface 130 via the lower connector 126 and upper connector 128, in some examples, the controller 184 can communicate with one or both of the tank water level sensor 140 and the interface 130 directly, for example, via a wireless communication (e.g., a Bluetooth® connection).

In various embodiments, controller 184 can include any component or combination of components capable of receiving data (e.g., a user-selected mist emission setting via the user interface, tank liquid level data via the liquid level detector, reservoir liquid quantity data from liquid quantity sensor 154, fan speed related data from the fan(s) 160, etc.) from one or more system components. The controller 184 can be further configured to analyze the received data, and perform one or more actions based on the analyzed data. In various examples, controller 184 can be embodied as one or more processors operating according to instructions included in a memory (e.g., memory 178), such as a non-transitory computer-readable medium. Such memory can be integral with the controller 184 or separate therefrom. In other examples, such a controller 184 can be embodied as one or more microcontrollers, circuitry arranged to perform prescribed tasks, such as an application-specific integrated circuit (ASIC), or the like.

In some embodiments, the controller 184 can be configured to communicate with other humidifier components in any of a variety of ways, such as via wired or wireless communication (e.g., via lower connector 126 and upper connector 128). In some examples, the controller 184 can communicate with one or more components via an I2C connection, a Bluetooth® connection, or other known communication types. In various embodiments, controller 184 can be embodied as a plurality of controllers separately in communication with different system components. Such controllers can be programmed to operate in concert (e.g., according to instructions stored in a single memory or communicating memories), or can operate independently of one another.

For example, in various embodiments, the controller 184 can be in one- or two-way communication with various components of the humidifier, such as the atomizer 156, the valve 150, the fan(s) 160, the liquid quantity sensor 154, the interface 130, and/or the tank water level sensor 140. For example, as described elsewhere herein, in some embodiments, the controller 184 can be configured to receive data from the liquid quantity sensor 154 and control operation of the valve 150. This could include receiving such data from the sensor 154 and causing a current to be output onto a component coupled to the valve 150 (e.g., the shape memory alloy). The controller 184 may also be configured to receive data from the liquid quantity sensor 154 and control operation of the atomizer 156 and/or fan(s) 160 in conjunction with control of the valve 150. It will be appreciated that various examples are possible, some of which are described herein by way of example.

The controller 184 can adjust operation of one or more humidifier components to adjust the humidifier output according to received input. In some examples, the controller 184 can adjust the operation (e.g., the operating power, operating frequency) of the atomizer 156 in order to produce more or less mist and/or vary the degree of atomization of the liquid. Additionally or alternatively, the controller 184 can adjust the operating speed of a fan 160 (e.g., a mist fan, such as a centrifugal fan) to control the speed at which mist is expelled from the humidifier. In certain examples, the controller 184 may selectively adjust one or both of the atomizer 156 and the fan 160 depending on the magnitude of output level change and/or desired output level. In further examples, as described elsewhere herein, the controller 184 can receive data from one or more components, such as fan(s) 160, and/or sensors, such as liquid quantity sensor 154 in the base portion 120 and/or external sensors in communication with controller 184. In some such examples, the controller 184 can be configured to receive data from such sensors and adjust humidifier operation accordingly. For instance, in an exemplary embodiment, the controller 184 monitors the liquid level in the reservoir according to data received from the liquid quantity sensor 154 and can act to adjust the liquid level in the reservoir via actuation of the valve 150. As another example, the controller 184 monitors the speed of the fan(s) 160 according to data received from the fan(s) 160 and can act to adjust the power being supplied to the fan(s) 160.

In some embodiments, the communication interface 182 can facilitate communication between one or more humidifier components (e.g., controller 184) and one or more external components via a wired connection and/or a wireless connection, such one or more of a Wi-Fi® connection, a Bluetooth® connection, or the like. In some such embodiments, the controller 184 can be accessed via the communication interface 182 such that a user can adjust one or more settings of the controller 184 via an external or remote device. Similarly, such access to the controller 184 can be used to control operation of the humidifier, such as a desired amount of mist emission or the like, in addition to or instead of other interfaces (e.g., interface 130). In some such examples, a user can interface with the communication interface 182 of the humidifier via, for example, a web interface and/or an application running on the user's mobile device, such as a smartphone, tablet, or the like, for example, as described in US Pat. App. No. 15/665,616, titled "Humidifier User Interaction.

In some embodiments, the controller 184 can additionally or alternatively be in communication with one or more external devices, for example, via communication interface 182. In some such examples, the controller 184 can receive data from one or more sensors external to or built-in to the humidifier, for example, via wired or wireless communication, such as Ethernet, Bluetooth®, Wi-Fi®, etc. Some such sensors can be used for measuring different aspects of the ambient environment of the humidifier, such as a temperature sensor, humidity sensor (e.g., a hygrometer), or the like. In some such examples, the controller 184 can perform one or more operations according to received data from external sensors. In some embodiments, remotely located components such as a humidity sensor, temperature sensor, or the like can be used to measure various parameters regarding the ambient environment surrounding the humidifier. In some such examples, there is no need to sample surrounding air in the humidifier itself, and the humidifier base portion can be made without vents (e.g., base portion 120b in FIG. 1B), which reduces the likelihood of excess liquid from undesirably entering the base portion of the humidifier.

In the illustrated example, power supply 170 is in communication with a variety of components in the base portion 120 as well as lower connector 126, which itself is in communication with the upper connector 128. Thus, in various embodiments, the power supply 170 can provide electrical power to various components in the base portion 120, such as the atomizer 156, valve 150, fan(s) 160, sensor 154, communication interface 182, controller 184, as well as any other components. Further, power supply 170 can provide electrical power to components proximate the liquid tank 102, such as the tank water level sensor 140 and the interface 130, by way of the upper connector 128 and lower connector 126.

In various embodiments, power supply 170 can include one or more sources of electrical power, such as one or more batteries, capacitive energy storage devices, or the like. Additionally or alternatively, power supply 170 can include a wired power supply, for example, a plug capable of plugging into an outlet. In some embodiments, the power supply 170 receives electrical power from a power source (e.g., a wall outlet) and outputs an appropriate electrical power to various humidifier components as needed during operation of the humidifier. As noted, in some cases an amount of electrical power output to certain humidifier components (e.g., the fan(s) 160) can be regulated by the controller 184. In some examples, each component in the humidifier can operate at approximately the same voltage output from power supply 170. In still further examples, power supply 170 can include a plurality of power-supplying components for providing different amounts of electrical power to different components. For instance, in some embodiments, power supply 170 can include a power board having a plurality of outputs for providing power to various system components. In some embodiments, power supplied to various components within the humidifier are independent from one another so that any short circuit condition (e.g., due to liquid ingress) in the power supplied to one portion of the humidifier does not impact the power supplied elsewhere.

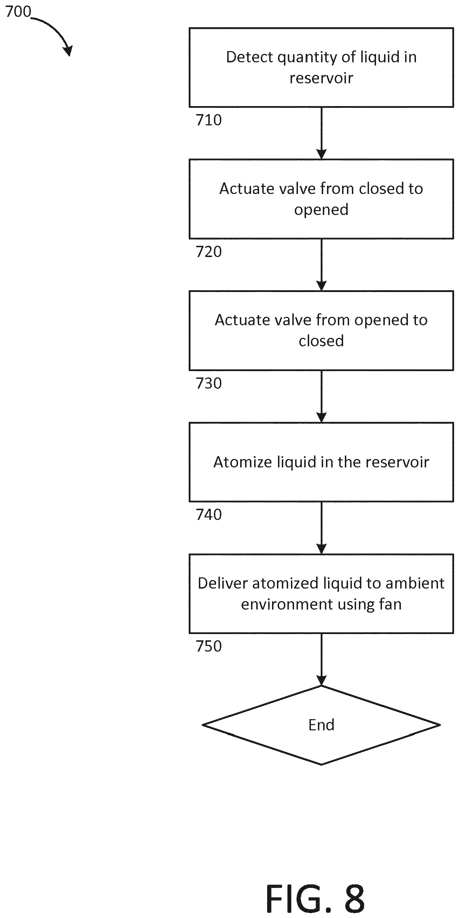

FIG. 8 is a flow diagram showing an exemplary embodiment of a process 700 for operating a humidifier. At step 710, the process 700 includes detecting a quantity of liquid in a reservoir of the humidifier. In one embodiment, a liquid quantity sensor located in the reservoir can be used to monitor a quantity of liquid within the reservoir, for instance by monitoring the liquid level within the reservoir. As one example, the liquid quantity sensor can include a floating member (e.g., a magnet) within the reservoir and a sensing device (e.g., a Hall-Effect sensor) configured to detect a distance between the floating member and the detecting device. In such example, detecting quantity of liquid within the reservoir includes determining the liquid level within the reservoir based on the detected distance between the floating member and the detecting device. For instance, the greater the distance between the floating member and the detecting device, the higher the liquid level is within the reservoir and thus the greater the quantity of liquid within the reservoir.

At step 720, the process 700 includes actuating a valve from a closed position to an opened position in response to detecting a first predetermined quantity of liquid in the reservoir. In the closed position, the valve can prevent communication of liquid between an interior volume of a liquid supply tank and the reservoir. In the opened position, the valve can allow communication of liquid between the interior volume of the liquid supply tank and the reservoir. Thus, actuating the valve from the closed position to the opened position can cause liquid to be added to the reservoir. In one embodiment, a controller of the humidifier can receive data from the liquid quantity sensor and execute instructions to determine that the received data indicates the first predetermined quantity is present. The controller can then take action to actuate the valve from the closed to the opened position.

At step 730, the process 700 includes actuating the valve from the opened positon to the closed position in response to detecting a second predetermined quantity of liquid in the reservoir. Actuating the valve from the opened position to the closed position can cause liquid to stop being added to the reservoir. As one example, the first predetermined liquid quantity may correspond to a first predetermined distance between the floating member and the sensing device and the second predetermined liquid quantity may correspond to a second predetermined distance between the floating member and the sensing device. In such an example, the second predetermined quantity of liquid in the reservoir can be greater than the first predetermined quantity of liquid in the reservoir, and thus the second predetermined distance would be greater than the first predetermined distance.

In one particular embodiment, actuating the valve can include deforming a shape memory alloy coupled to the valve. For instance, actuating the valve from the closed positon to the opened position may include deforming the shape memory alloy, for instance, by transforming the shape memory alloy from its original shape to a deformed (e.g., relatively more compressed) shape. This deformation can allow liquid to pass into the reservoir. To actuate the valve from the opened position to the closed position can include returning the shape memory alloy to its original shape.

Detecting the quantity of liquid in the reservoir and actuating a valve to control liquid communication into the reservoir, as a result of the detecting, can be useful in maintaining an efficient liquid level within the reservoir. For instance, as described elsewhere herein, this can help to keep the liquid level in the reservoir within a focal region of a fluid atomizer located in the reservoir. In one embodiment, the first predetermined liquid quantity can correspond to a liquid level that is at or near a low liquid level end of the focal region. By actuating the valve from the closed position to the opened position upon detecting this, the liquid level within the reservoir can be raised to the second predetermined liquid quantity level which can correspond to a liquid level that is at or near an upper liquid level end of the focal region.

At step 740, the process 700 includes atomizing liquid in the reservoir using a liquid atomizer. The liquid atomizer can be located in the reservoir. In one example, the liquid atomizer includes an agitator which is driven to atomize a portion of the liquid in the reservoir to a desired extent. For instance, the liquid atomizer can include an ultrasonic agitator. The ultrasonic agitator can include a transducer element which can be driven to oscillate a portion of the liquid in the reservoir at an ultrasonic frequency and thereby cause this portion of the liquid to be atomized.

At step 750, the process includes delivering atomized liquid from the reservoir to an ambient environment using a fan. The fan can be in fluid communication with the reservoir and, in some cases, located in the reservoir. In one example, the fan is in fluid communication with both the reservoir and a column of the humidifier. This column can have one end in fluid communication with the reservoir and an opposite end in fluid communication with the ambient environment. The fan can be driven during operation of the humidifier to forcibly expel atomized liquid from the reservoir to the ambient environment through the column.

Various non-limiting exemplary embodiments have been described. It will be appreciated that suitable alternatives are possible without departing from the scope of the examples described herein. These and other examples are within the scope of the following numbered clauses.
1. A humidifier comprising:
   a liquid tank defining a first interior volume;
   a reservoir in liquid communication with the first interior volume of the liquid tank;
   a liquid atomizer located in the reservoir;
   a valve configured to actuate between a closed position and an opened position, the closed position preventing liquid communication between the first interior volume of the liquid tank and the reservoir, and the opened position allowing liquid communication between the first interior volume of the liquid tank and the reservoir; and
   a controller coupled to the valve and configured to selectively actuate the valve between the closed position and the opened position.
2. The humidifier of clause 1, further comprising a liquid quantity sensor located in the reservoir and coupled to the controller, wherein the controller is configured to actuate the valve from the closed position to the opened position in response to a first signal from the liquid quantity sensor corresponding to a first predetermined liquid quantity in the reservoir.
3. The humidifier of clause 2, wherein the controller is configured to actuate the valve from the opened position to the closed position in response to a second signal from the liquid quantity sensor corresponding to a second predetermined liquid quantity in the reservoir, the second predetermined liquid quantity in the reservoir being greater than the first predetermined liquid quantity in the reservoir.
4. The humidifier of clause 3, wherein the liquid atomizer comprises an ultrasonic agitator, the ultrasonic agitator having a focal region for atomizing liquid within the reservoir, wherein each of the first predetermined liquid quantity and the second predetermined liquid quantity correspond liquid levels within the reservoir at the focal region of the ultrasonic agitator.
5. The humidifier of clause 3 or clause 4, wherein the liquid quantity sensor comprises a floating member located in the reservoir and a sensing device configured to detect a distance between the floating member and the sensing device, the sensing device in signal communication with the controller.
6. The humidifier of clause 5, wherein the liquid quantity sensor generates the first signal when the floating member is a first predetermined distance from the sensing device and the second signal when the floating member is a second predetermined distance from the sensing device, the second predetermined distance being greater than the first predetermined distance.
7. The humidifier of clause 5 or clause 6, wherein the floating member comprises a magnet and the sensing device comprises a Hall-Effect sensor.
8. The humidifier of any one of the preceding clauses, wherein the controller is coupled to the valve via a shape memory alloy that is deformed in response to a signal from the controller to actuate the valve from the closed position to the opened position.
9. The humidifier of clause 8, wherein the shape memory alloy comprises nitinol wire and the signal from the controller comprises a current.
10. The humidifier of any one of the preceding clauses, further comprising a holding chamber defining a second interior volume, the holding chamber in liquid communication with the reservoir at a first location and the first interior volume of the liquid tank at a second location.
11. The humidifier of clause 10, wherein the valve is positioned at the first location such that liquid communicated between the first interior volume of the liquid tank and the reservoir when the valve is in the opened position passes through the second interior volume of the holding chamber.
12. The humidifier of clause 11, wherein a tank interface assembly is positioned at the second location, wherein the tank interface assembly defines a port for liquid communication between the first interior volume of the liquid tank and the second interior volume of the holding chamber, and wherein the tank interface assembly includes an actuation member configured to mate with a sealing component of the liquid tank and thereby open the sealing component of the liquid tank to the port.
13. The humidifier of clause 10, wherein the liquid tank defines a burp valve that is in fluid communication with the first interior volume of the liquid tank and an ambient atmosphere.
14. The humidifier of any one of the preceding clauses, further comprising a fan in communication with the reservoir and coupled to the controller.
15. A method of operating a humidifier, the method comprising the steps of:
   detecting a quantity of liquid in a reservoir of the humidifier;
   actuating a valve from a closed position to an opened position in response to detecting a first predetermined liquid quantity in the reservoir, the closed position preventing liquid communication between a first interior volume of a liquid tank and the reservoir, and the opened position allowing liquid communication between the first interior volume of the liquid tank and the reservoir;
   actuating the valve from the opened position to the closed position in response to detecting a second predetermined liquid quantity in the reservoir, the second predetermined liquid quantity in the reservoir being greater than the first predetermined liquid quantity in the reservoir;
   atomizing liquid in the reservoir using a liquid atomizer; and
   delivering atomized liquid from the reservoir to an ambient environment using a fan.
16. The method of clause 15, wherein detecting the quantity of liquid in the reservoir comprises determining a distance between a floating member located in the reservoir and a sensing device.
17. The method of clause 16, wherein the first predetermined liquid quantity corresponds to a first predetermined distance between the floating member and the sensing device, and the second predetermined liquid quantity corresponds to a second predetermined distance between the floating member and the sensing device, and wherein the second predetermined distance is greater than the first predetermined distance.
18. The method of clause 16, wherein the floating member comprises a magnet and the sensing device comprises a Hall-Effect sensor.
19. The method of any one of clauses 15 to 18, wherein actuating the valve from the closed position to the opened position comprises deforming a shape memory alloy coupled to the valve.
20. The method of any one of clauses 15 to 18, further comprising the step of communicating liquid from the first interior volume of the liquid tank to a second interior volume of a holding chamber that is in liquid communication with the reservoir, and wherein actuating the valve from the closed position to the opened position allows liquid communication between the first interior volume of the liquid tank and the reservoir through the second interior volume of the holding chamber.
21. A method of operating the humidifier according to any one of clauses 1 to 14.

## Claims

1. A humidifier comprising:
a liquid tank defining a first interior volume;
a reservoir in liquid communication with the first interior volume of the liquid tank;
a liquid atomizer located in the reservoir;
a valve configured to actuate between a closed position and an opened position, the closed position preventing liquid communication between the first interior volume of the liquid tank and the reservoir, and the opened position allowing liquid communication between the first interior volume of the liquid tank and the reservoir; and
a controller coupled to the valve and configured to selectively actuate the valve between the closed position and the opened position.

2. The humidifier of claim 1, further comprising a liquid quantity sensor located in the reservoir and coupled to the controller, wherein the controller is configured to actuate the valve from the closed position to the opened position in response to a first signal from the liquid quantity sensor corresponding to a first predetermined liquid quantity in the reservoir.

3. The humidifier of claim 2, wherein the controller is configured to actuate the valve from the opened position to the closed position in response to a second signal from the liquid quantity sensor corresponding to a second predetermined liquid quantity in the reservoir, the second predetermined liquid quantity in the reservoir being greater than the first predetermined liquid quantity in the reservoir.

4. The humidifier of claim 3, wherein the liquid atomizer comprises an ultrasonic agitator, the ultrasonic agitator having a focal region for atomizing liquid within the reservoir, wherein each of the first predetermined liquid quantity and the second predetermined liquid quantity correspond liquid levels within the reservoir at the focal region of the ultrasonic agitator.

5. The humidifier of claim 3 or claim 4, wherein the liquid quantity sensor comprises a floating member located in the reservoir and a sensing device configured to detect a distance between the floating member and the sensing device, the sensing device in signal communication with the controller.

6. The humidifier of claim 5, wherein the liquid quantity sensor generates the first signal when the floating member is a first predetermined distance from the sensing device and the second signal when the floating member is a second predetermined distance from the sensing device, the second predetermined distance being greater than the first predetermined distance.

7. The humidifier of claim 5 or claim 6, wherein the floating member comprises a magnet and the sensing device comprises a Hall-Effect sensor.

8. The humidifier of any one of the preceding claims, wherein the controller is coupled to the valve via a shape memory alloy that is deformed in response to a signal from the controller to actuate the valve from the closed position to the opened position.

9. The humidifier of claim 8, wherein the shape memory alloy comprises nitinol wire and the signal from the controller comprises a current.

10. The humidifier of any one of the preceding claims, further comprising a holding chamber defining a second interior volume, the holding chamber in liquid communication with the reservoir at a first location and the first interior volume of the liquid tank at a second location.

11. The humidifier of claim 10, wherein the valve is positioned at the first location such that liquid communicated between the first interior volume of the liquid tank and the reservoir when the valve is in the opened position passes through the second interior volume of the holding chamber.

12. The humidifier of claim 11, wherein a tank interface assembly is positioned at the second location, wherein the tank interface assembly defines a port for liquid communication between the first interior volume of the liquid tank and the second interior volume of the holding chamber, and wherein the tank interface assembly includes an actuation member configured to mate with a sealing component of the liquid tank and thereby open the sealing component of the liquid tank to the port.

13. The humidifier of claim 10, wherein the liquid tank defines a burp valve that is in fluid communication with the first interior volume of the liquid tank and an ambient atmosphere.

14. The humidifier of any one of the preceding claims, further comprising a fan in communication with the reservoir and coupled to the controller.

15. A method of operating the humidifier according to any one of claims 1 to 14.
